# EUROPEAN PATENT APPLICATION

(11) **EP 4 216 024 A1**
(43) Date of publication of application: **26.07.2023**
(21) Application number: 21898325.2
(22) Date of filing: 01.10.2021
(51) Int. Cl.: G06F 1/16, G09F 9/30

(54) **ELECTRONIC DEVICE COMPRISING FLEXIBLE DISPLAY**

(30) Priority: 30.11.2020 KR 20200164944; 14.01.2021 KR 20210005328
(71) Applicant: Samsung Electronics Co., Ltd., Suwon-si, Gyeonggi-do 16677 (KR)
(72) Inventor: YANG, Soonwoong, Suwon-si, Gyeonggi-do 16677 (KR)
(74) Representative: HGF
(86) International application number: PCT/KR2021/013521
(87) International publication number: WO 2022/114498

(57) **Abstract**

An electronic device according to various embodiments of the present invention may comprise: a first housing; a second housing slidably coupled to the first housing, at least a part of the first housing sliding in and/or out of the second housing; a sliding support module disposed in at least a part of the top of the first housing; and a flexible display at least partially connected to the first housing and supported by at least a part of the first housing and at least a part of the sliding support module, wherein the sliding support module is constituted to , when at least a part of the first housing and at least a part of the flexible display slide out of the second housing, extend according to the sliding out of the flexible display to support at least a part of the rear surface of the flexible display. Various other embodiments are possible.

## Description

### [Technical Field]

Various embodiments of the present disclosure relate to an electronic device including a flexible display.

### [Background Art]

There is an increasing use of portable electronic devices such as smartphones, and various functions are applied to these electronic devices.

An electronic device has been developed so that a display of the electronic device may be expanded in a sliding manner to make it easy to carry the electronic device and to provide a wider screen to a user.

For example, a sliding or rollable type electronic device has a flexible display that may be partially retracted into a housing or extended to the outside of the housing.

### [Disclosure of Invention]

### [Technical Problem]

Electronic devices may include a slidable electronic device (e.g., a rollable electronic device) that may be deformed so that a display area of a display may be expanded.

The slidable electronic device may include first and second housing that may be movably coupled to each other by being at least partially fitted with each other.

In the slidable electronic device, the first and second housings may be slidable relative to each other and support at least a part of a flexible display (or an expandable display). For example, the second housing may be fixed, and the first housing may be retracted into the second housing or extended to the outside of the second housing.

The flexible display may have a first display area in a state (slide-in state) in which the first housing is retracted into the second housing. The flexible display may have a second display area larger than the first display area in a state (slide-out state) in which the first housing is extended to the outside of the second housing.

In the slidable electronic device, an empty space may be formed in at least a part of a rear surface of the flexible display in a case that the first housing and the flexible display are expanded by being extended and slid from the second housing.

The flexible display may be damaged in a case that a user of the slidable electronic device applies pressure to a portion of the flexible display having the empty space formed in the rear surface thereof.

In a case that the user of the slidable electronic device touches the portion of the flexible display having the empty space formed in the rear surface thereof, an error occurs on a touch input because of free movement in the empty space.

Various embodiments of the present disclosure may provide an electronic device, in which a rear surface of a flexible display may be supported at multiple points by a sliding support module when a flexible display is expanded.

Technical problems to be solved by the present disclosure are not limited to the above-mentioned technical problems, and other technical problems, which are not mentioned above, may be clearly understood from the following descriptions by those skilled in the art to which the present disclosure pertains.

### [Solution to Problem]

An electronic device according to various embodiments of the present disclosure may include: a first housing; a second housing slidably coupled to the first housing and constituted to allow at least a part of the first housing to be retracted into and/or extended from the second housing; a sliding support module disposed on at least a part of an upper portion of the first housing; and a flexible display at least partially connected to the first housing and supported by at least a part of the first housing and at least a part of the sliding support module, in which in case that at least a part of the first housing and at least a part of the flexible display are extended to the outside of the second housing, the sliding support module is expanded to correspond to the extension of the flexible display and supports at least a part of a rear surface of the flexible display.

An electronic device according to various embodiments of the present disclosure may include: a first housing; a second housing slidably coupled to the first housing and constituted to allow at least a part of the first housing to be retracted into and/or extended from the second housing; a sliding support module disposed on at least a part of an upper portion of the first housing; and a flexible display at least partially connected to the first housing and supported by at least a part of the first housing and at least a part of the sliding support module, in which the sliding support module may include: first and second plates constituted to support at least a part of a rear surface of the flexible display; and first and second links connected to the first and second plate and constituted to change an interval between the first plate and the second plate, and in which the interval between the first plate and the second plate increases to correspond to expansion of the first link and the second link in case that at least a part of the first housing and at least a part of the flexible display slide in a designated direction, such that the first plate and the second plate are constituted to support the rear surface of the flexible display at a plurality of points.

### [Advantageous Effects of Invention]

According to various embodiments of the present disclosure, the rear surface of the flexible display is supported at multiple points by the sliding support module, and the pressure applied from the outside of the flexible display is dispersed when the flexible display is expanded, which makes it possible to prevent damage to and malfunction of the flexible display.

In addition, various effects that can be directly or indirectly identified through the present document may be provided.

### [Brief Description of Drawings]

In connection with the description of the drawings, the same or similar reference numerals may be used for the same or similar components.
FIG. 1 is a block diagram of an electronic device in a network environment according to various embodiments of the present disclosure.
FIG. 2A is a perspective view illustrating the electronic device in a slide-in state according to various embodiments of the present disclosure.
FIG. 2B is a perspective view illustrating the electronic device in a slide-out state according to various embodiments of the present disclosure.
FIG. 3 is an exploded perspective view schematically illustrating the electronic device according to various embodiments of the present disclosure.
FIG. 4 is a view illustrating a constitution of a flexible display according to various embodiments of the present disclosure.
FIG. 5A is a view illustrating a state in which a plurality of plates of a sliding support module according to various embodiments of the present disclosure is closed.
FIG. 5B is a view illustrating a state in which the plurality of plates of the sliding support module according to various embodiments of the present disclosure is spread.
FIG. 6A is a view illustrating a front surface of the sliding support module according to various embodiments of the present disclosure.
FIG. 6B is a view illustrating a rear surface of the sliding support module according to various embodiments of the present disclosure.
FIG. 7A is a view illustrating a state in which part A of the plurality of plates illustrated in FIG. 6A is closed.
FIG. 7B is a view illustrating a state in which part A of the plurality of plates illustrated in FIG. 6A is spread.
FIG. 8 is a view illustrating a coupling relationship between first and second bent portions and first and second rails of the plate of the electronic device according to various embodiments of the present disclosure.
FIG. 9 is a cross-sectional view schematically illustrating part 9-9' of the electronic device according to various embodiments of the present disclosure illustrated in FIG. 2A.
FIG. 10 is an enlarged view illustrating part B illustrated in FIG. 9.
FIG. 11A is a cross-sectional view schematically illustrating part 11a-11a' of the electronic device according to various embodiments of the present disclosure illustrated in FIG. 2A.
FIG. 11B is a cross-sectional view schematically illustrating part 11b-11b' of the electronic device according to various embodiments of the present disclosure illustrated in FIG. 2B.

### [Mode for the Invention]

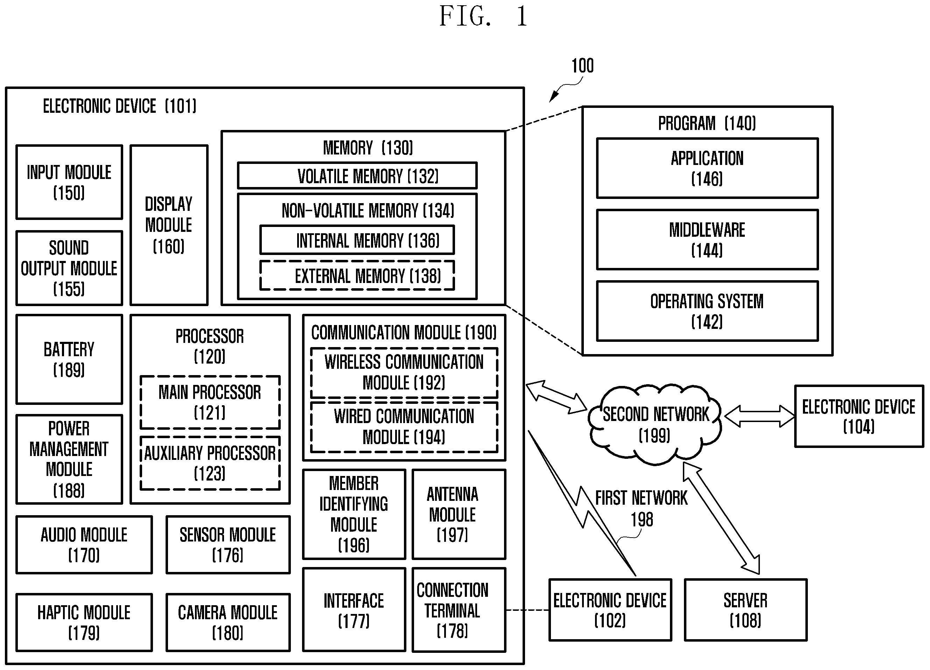

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

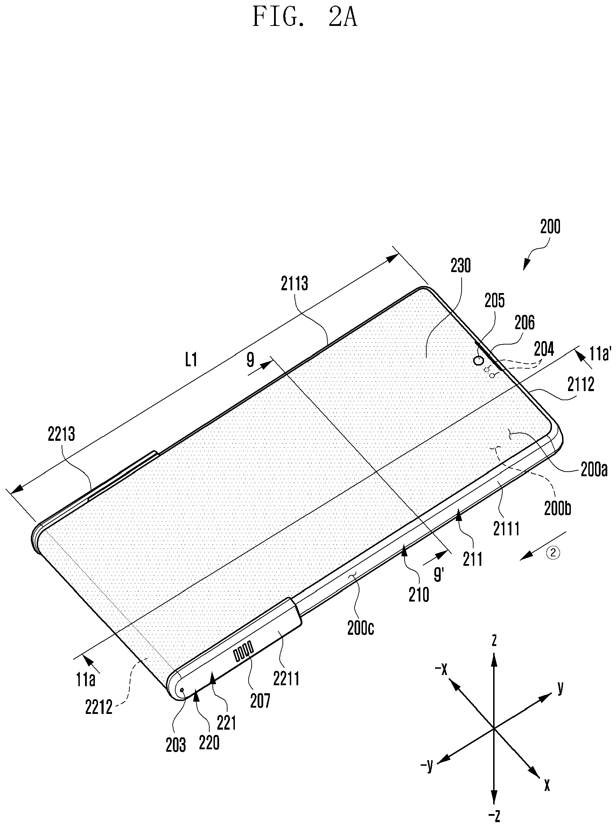

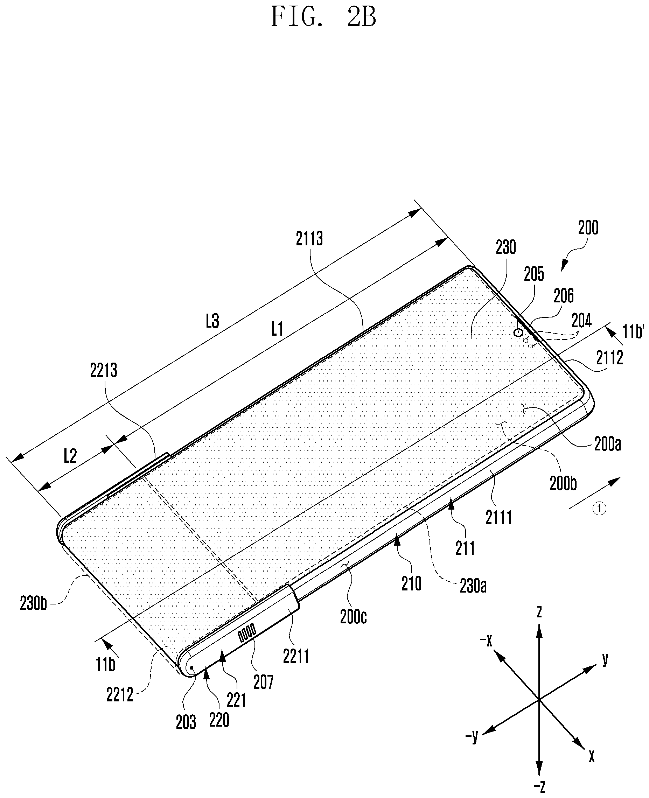

FIG. 2A is a perspective view illustrating the electronic device in a slide-in state according to various embodiments of the present disclosure. FIG. 2B is a perspective view illustrating the electronic device in a slide-out state according to various embodiments of the present disclosure.

An electronic device 200 illustrated in FIGS. 2A and 2B may include the constituent elements and embodiments described with reference to the electronic device 101 illustrated in FIG. 1. The electronic device 200 illustrated in FIGS. 2A and 2B may further include constituent elements and embodiments at least partially similar to or different from those of the electronic device 101 illustrated in FIG. 1.

With reference to FIGS. 2A and 2B, the electronic device 200 may include a first housing 210, a second housing 220 slidably coupled to the first housing 210, and a flexible display 230 (e.g., an expandable display) disposed to be supported by at least a part of the first housing 210 and at least a part of the second housing 220. At least a part of the first housing 210 may be coupled to the flexible display 230. The electronic device 200 may be constituted such that at least a part of the first housing 210 and at least a part of the flexible display 230 are extended and slid from the second housing 220 and expanded in a first direction (e.g., direction ①) (e.g., a y-axis direction in FIG. 2B).

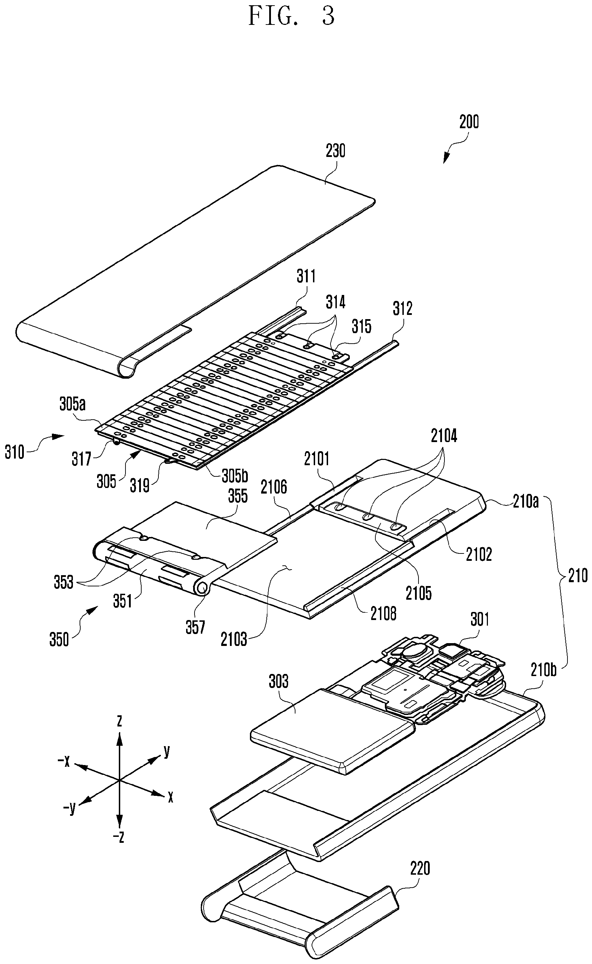

According to various embodiments, the electronic device 200 may include a sliding support module (e.g., a sliding support module 310 in FIG. 3) that is contracted and/or expanded depending on a slide-in state and/or a slide-out state of the first housing 210 and the flexible display 230. The sliding support module 310 may be disposed between the first housing 210 (e.g., a first bracket housing 210a in FIG. 3) and the flexible display 230. In a case that the flexible display 230 is slid in the first direction (e.g., direction ①) (e.g., the y-axis direction in FIG. 2B) and in a slide-out state, the sliding support module 310 may also be expanded and support a rear surface of the flexible display 230 at a plurality of points.

According to various embodiments, in the slide-in state, at least a part of the flexible display 230 may be accommodated in an internal space of the second housing 220, such that at least a part of the flexible display 230 may be disposed to be invisible from the outside. In the slide-out state, at least a part of the flexible display 230 may be disposed to be visible from the outside while being supported by at least a part of the first housing 210 and at least a part of the second housing 220. At least a part of the flexible display 230 may be disposed to be visible from the outside while being supported by the sliding support module (e.g., the sliding support module 310 in FIG. 3) that defines substantially the same plane as the first housing 210 in the slide-out state.

According to various embodiments, the electronic device 200 may include a front surface 200a (e.g., a first surface), a rear surface 200b (e.g., a second surface) directed in a direction opposite to the front surface 200a, and a side surface 200c constituted to surround a space between the front surface 200a and the rear surface 200b.

According to the embodiment, the first housing 210 of the electronic device 200 may include a first lateral member 211. The second housing 220 may include a second lateral member 221.

According to various embodiments, the first lateral member 211 may include a first side surface 2111 having a first length in a designated direction (e.g., the y-axis direction), a second side surface 2112 extending from the first side surface 2111 in a direction (e.g., a -x-axis direction) substantially perpendicular to the first side surface 2111 and having a second length shorter than the first length, and a third side surface 2113 extending substantially in parallel with the first side surface 2111 from the second side surface 2112 and having the first length. The first lateral member 211 may be at least partially made of a conductive material (e.g., metal). A part of the first lateral member 211 may include at least one conductive portion segmented by at least one segmenting portion (e.g., a non-conductive portion). At least one conductive portion is electrically connected to the wireless communication module 192 illustrated in FIG. 1 and may be used as an antenna that operates in a designated frequency band (e.g., a legacy band or sub-6 band).

According to various embodiments, the second lateral member 221 may include: a fourth side surface 2211 at least partially corresponding to the first side surface 2111 and having a third length, a fifth side surface 2212 extending substantially in parallel with the second side surface 2112 from the fourth side surface 2211 and having a fourth length longer than the third length, and a sixth side surface 2213 extending from the fifth side surface 2212, corresponding to the third side surface 2113, and having the third length. The second lateral member 221 may be at least partially made of a conductive material (e.g., metal). A part of the second lateral member 221 may include at least one conductive portion segmented by at least one segmenting portion (e.g., a non-conductive portion). At least one conductive portion is electrically connected to the wireless communication module 192 illustrated in FIG. 1 and may be used as an antenna that operates in a designated frequency band (e.g., a legacy band or sub-6 band).

According to various embodiments, the first side surface 2111, the fourth side surface 2211, the third side surface 2113, and the sixth side surface 2213 may be slidably connected to one another. In a case that a part of the first housing 210 of the electronic device 200 is in the slide-in state in the second housing 220, the first side surface 2111 may be disposed so that at least a part of the first side surface 2111 overlaps at least a part of the fourth side surface 2211, and the remaining part of the first side surface 2111 is visible from the outside. In a case that a part of the first housing 210 of the electronic device 200 is in the slide-in state in the second housing 220, the third side surface 2113 may be disposed so that at least a part of the third side surface 2113 overlaps at least a part of the sixth side surface 2213, and the remaining part of the third side surface 2113 is visible from the outside.

According to various embodiments, the electronic device 200 may include the flexible display 230 disposed to be supported by at least a part of the first housing 210 and at least a part of the second housing 220. At least a part of the flexible display 230 may be coupled to at least a part of the first housing 210. The flexible display 230 may include a first part 230a (e.g., a planar part) visible from the outside regardless of the slide-in state and the slide-out state, and a second part 230b (e.g., a bendable part) extending from the first part 230a and at least partially inserted into the internal space of the second housing 220 so as to be invisible from the outside in the slide-in state.

According to the embodiment, the first and second parts 230a and 230b of the flexible display 230 may be disposed to be supported by a part of the first housing 210 and a part of the second housing 220. In another embodiment, the first part 230a of the flexible display 230 may be disposed to be supported by at least a part of the first housing 210 and at least a part of the sliding support module (the sliding support module 310 in FIG. 3). At least a part of the second part 230b may be extended so that the first housing 210 may be moved or expanded from the second housing 220 in the designated first direction (e.g., direction ①) (e.g., the y-axis direction). In the slide-out state, at least a part of the second part 230b may at least partially extend from the first part 230a while being supported by the first housing 210 and the second housing 220, define substantially the same plane as the first part 230a, and be disposed to be visible from the outside.

According to the embodiment, at least a part of the second part 230b may be retracted so that the first housing 210 is moved or retracted to the second housing 220 in a designated second direction (e.g., direction ②) (e.g., a -y-axis direction in FIG. 2A). In the slide-in state, the second part 230b may be disposed so that at least a part of the second part 230b is retracted into the internal space of the second housing 220 and is invisible from the outside. A display area of the flexible display 230 may vary as the first housing 210 slides from the second housing 220 in the first direction (e.g., direction ①) or the second direction (e.g., direction ②). At least a part of the flexible display 230 may surround a roller member (e.g., a roller member 350 in FIG. 3). The roller member 350 may be constituted to rotate to correspond to the sliding motion of the flexible display 230 when the flexible display 230 slides in the slide-in state and/or the slide-out state.

According to various embodiments, the first and second housings 210 and 220 of the electronic device 200 may slide relative to each other so that an overlap length of the electronic device varies. The electronic device 200 may be constituted to have a first length L1 from the second side surface 2112 to the fifth side surface 2212 in the slide-in state. The electronic device 200 may be constituted to have a third length L3 longer than the first length L1 as the first housing 210 of the electronic device 200 is moved to have an additional second length L2 from the second housing 220 in the slide-out state. The flexible display 230 may have a display area substantially corresponding to the first length L1 in the slide-in state. The flexible display 230 may have an expanded display area substantially corresponding to the third length L3 in the slide-out state.

According to various embodiments, the extension operation of the electronic device 200 may be performed by the user's operation. For example, the slide-in state of the electronic device 200 may be changed to the slide-out state as the user presses an outer surface of the flexible display 230 in the first direction (e.g., direction ①) (e.g., the y-axis direction in FIG. 2A). In any embodiment, the first housing 210 may also be extended in the first direction (e.g., direction ①) by a locker (not illustrated) exposed through the rear surface 200b of the electronic device 200. In any embodiment, the first housing 210 may be automatically operated by a drive mechanism (e.g., a drive motor, a speed reduction module, and/or a gear assembly) disposed in the internal space of the first housing 210 and/or the internal space of the second housing 220.

According to the embodiment, the electronic device 200 may be constituted to control the operation of retracting and/or extending the first housing 210 and/or the second housing 220 by using the drive mechanism when the processor (e.g., the processor 120 in FIG. 1) detects an event for changing the slide-in state and/or the slide-out state. In any embodiment, the processor (e.g., the processor 120 in FIG. 1) of the electronic device 200 may control the flexible display 230 to execute an application program and display objects in various ways to correspond to the changed display area of the flexible display 230 in accordance with the slide-in state, the slide-out state, or an intermediate state (e.g., including a free stop state).

According to various embodiments, the electronic device 200 may include at least one of an input module 203 (e.g., the input module 150 in FIG. 1) disposed in the internal space of the first housing 210 and/or the internal space of the second housing 220, sound output modules 206 and 207 (e.g., the sound output module 155 in FIG. 1), at least one sensor module 204 (e.g., the sensor module 176 in FIG. 1), at least one camera module 205 (e.g., the camera module 180 in FIG. 1), a connector port (not illustrated), a key input device (not illustrated), and an indicator (not illustrated). As another embodiment, the electronic device 200 may be constituted to exclude at least one of the above-mentioned constituent elements or further include other constituent elements.

According to various embodiments, the input module 203 may include a microphone. The input module 203 may include a plurality of microphones disposed to detect a direction of sound. The sound output modules 206 and 207 may include a speaker. The sound output modules 206 and 207 may include a telephone receiver 206 and an external speaker 207. The external speaker 207 may be disposed in the internal space of the second housing 220. The telephone receiver 206 may include a speaker (e.g., a piezoelectric speaker) operating without a separate speaker hole.

According to various embodiments, the at least one sensor module 204 may generate electrical signals or data values corresponding to an internal operating state of the electronic device 200 or the external environment state. For example, the at least one sensor module 204 may be disposed to detect an external environment through at least a part of the flexible display 230. In any embodiment, the electronic device 200 may further include at least one additional sensor module disposed to detect an external environment through the rear surface 200b. The sensor module 204 may include at least one of a proximity sensor, an illuminance sensor, a TOF (time of flight) sensor, an ultrasonic sensor, a fingerprint recognition sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, and a humidity sensor.

According to various embodiments, the at least one camera module 205 may include one or more lens, an image sensor, and/or an image signal processor. The at least one camera module may be disposed below the flexible display 230 and constituted to capture an image of a subject through a part of an activation area of the flexible display 230. For example, the at least one camera module 205 or the at least one sensor module 204 may be disposed to adjoin the external environment through an opening or transmissive area formed in the flexible display 230 in the internal space of the electronic device 200. An area of the flexible display 230, which faces the at least one camera module 205, is a part of the area for displaying content and may define a transmissive area having a designated transmittance rate. The transmissive area may be formed to have a transmittance rate within a range of about 5% to about 20%. The transmissive area may include an area that overlaps an effective area (e.g., a view angle area) of the at least one camera module 205 through which light, which is used by an image sensor to create an image, passes. For example, the transmissive area of the flexible display 230 may include an area having a lower pixel density and/or wiring density than the periphery thereof. For example, the transmissive area may be substituted with the above-mentioned opening. For example, the at least one camera modules 205 may include an under display camera (UDC). In any embodiment, the at least one sensor modules 204 may be disposed in the internal space of the electronic device 200 and perform a predetermined function thereof without being visually exposed through the flexible display 230. In any embodiment, the electronic device 200 may further include at least one additional camera module disposed to capture an image of an external subject through the rear surface 200b.

FIG. 3 is an exploded perspective view schematically illustrating the electronic device according to various embodiments of the present disclosure. FIG. 3 may be an exploded perspective view schematically illustrating the electronic device illustrated in FIGS. 2A and 2B.

According to various embodiments, the embodiments of the electronic device 200 disclosed below may include the embodiments illustrated in FIGS. 1 to 2B. In the description of various embodiments of the present disclosure disclosed below, the constitutions identical to the constitutions in the embodiment illustrated in FIGS. 1 to 2B will be designated by the same reference numerals, and a repeated description of functions thereof will be omitted.

With reference to FIG. 3, the electronic device 200 according to various embodiments of the present disclosure may include the first housing 210, the second housing 220, a printed circuit board 301, a battery 303, the flexible display 230, the sliding support module 310, and/or the roller member 350.

According to the embodiment, the first housing 210 may be slidably coupled to the second housing 220. The first housing 210 may be slidably coupled to the second housing 220 by being at least partially fitted with the second housing 220. At least a part of the first housing 210 may be retracted into the second housing 220 or extended to the outside of the second housing 220.

According to various embodiments, the first housing 210 may be constituted by coupling the first bracket housing 210a and a second bracket housing 210b. The first housing 210 may include the internal space provided by the coupling structure between the first bracket housing 210a and the second bracket housing 210b. The first bracket housing 210a may be disposed on an upper portion (e.g., based on a z-axis direction) of the second bracket housing 210b. The second bracket housing 210b may be disposed on a lower portion (e.g., based on a z-axis direction) of the first bracket housing 210a.

According to the embodiment, the printed circuit board 301 and the battery 303 (e.g., the battery 189 in FIG. 1) may be disposed in an internal space defined between the first bracket housing 210a and the second bracket housing 210b. The printed circuit board 301 may include the processor 120 illustrated in FIG. 1, the memory 130, the communication module 190, the sensor module 176, the camera module 180, and/or the power management module 188. The printed circuit board 301 may include the at least one camera module 205 or the at least one sensor module 204 illustrated in FIG. 2. The battery 303 may be disposed adjacent to the printed circuit board 301 or disposed to at least partially overlap the printed circuit board 301.

According to the embodiment, the first bracket housing 210a of the first housing 210 may include a first accommodation portion 2101, a second accommodation portion 2102, a seating surface 2103, a first coupling portion 2105, a first guide member 2106, and/or a second guide member 2108.

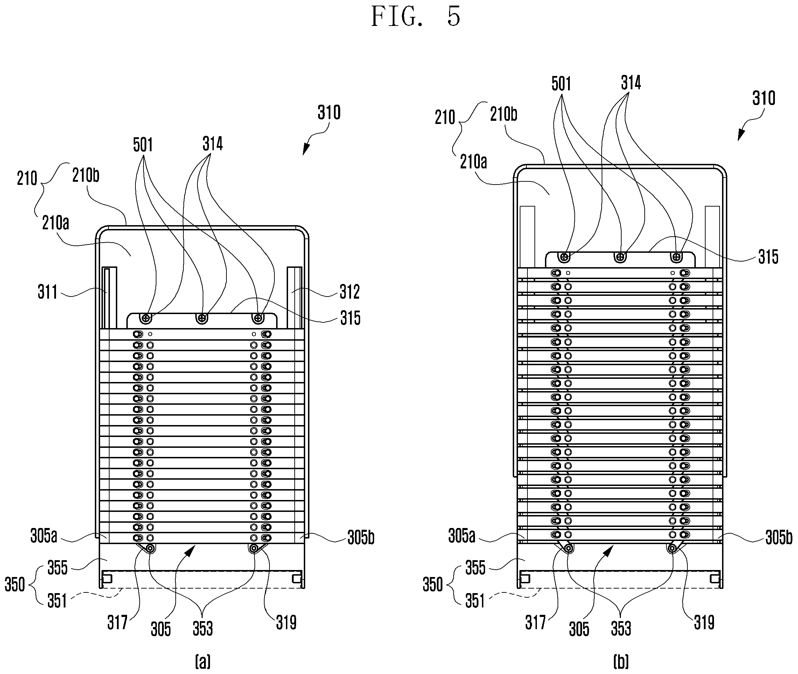

According to various embodiments, the first accommodation portion 2101 may be formed in an upper portion (e.g., based on the z-axis direction) of a first side (e.g., a left side) of the first bracket housing 210a. The first accommodation portion 2101 may accommodate at least a part of a first rail 311 of the sliding support module 310. The second accommodation portion 2102 may be formed in an upper portion (e.g., based on the z-axis direction) of a second side (e.g., a right side) opposite to the first side (e.g., the left side) of the first bracket housing 210a. The second accommodation portion 2102 may accommodate at least a part of a second rail 312 of the sliding support module 310. The seating surface 2103 may be formed on at least a part of the upper portion (e.g., based on the z-axis direction) of the first bracket housing 210a. The portion where the seating surface 2103 is formed may be formed to have a stepped portion from the portions where the first accommodation portion 2101 and the second accommodation portion 2102 are formed. At least some of a plurality of plates 305 of the sliding support module 310 may be seated and supported on the seating surface 2103. The first coupling portion 2105 may include at least one first fastening hole 2104. The at least one first fastening hole 2104 formed in the first coupling portion 2105 may be disposed to overlap at least one second fastening hole 314 formed in a second coupling portion 315 of the sliding support module 310 and coupled by using at least one coupling member (e.g., a coupling member 501 in FIG. 5). For example, the at least one coupling member (e.g., the coupling member 501 in FIG. 5) may include a fastening means such as a bolt. The at least one coupling member (e.g., the bolt) may be disposed at a position lower than the plurality of plates 305. The first guide member 2106 may be disposed on the upper portion (e.g., based on the z-axis direction) of the first side (e.g., the left side) of the seating surface 2103. The first guide member 2106 may engage with the first rail 311 of the sliding support module 310. The first guide member 2106 may be slidably coupled to the first rail 311. The first guide member 2106 may be constituted to slide the first bracket housing 210a along the first rail 311 of the sliding support module 310 in the first direction (e.g., the y-axis direction) or the second direction (e.g., the -y-axis direction). The second guide member 2108 may be disposed on the upper portion (e.g., based on the z-axis direction) of the second side (e.g., the right side) opposite to the first side (e.g., the left side) of the seating surface 2103. The second guide member 2108 may engage with the second rail 312 of the sliding support module 310. The second guide member 2108 may be slidably coupled to the second rail 312. The second guide member 2108 may be constituted to slide the first bracket housing 210a along the second rail 312 of the sliding support module 310 in the first direction (e.g., the y-axis direction) or the second direction (e.g., the -y-axis direction).

According to the embodiment, the flexible display 230 may be disposed to be supported by at least a part of the first bracket housing 210a of the first housing 210 and at least a part of the sliding support module 310. For example, the flexible display 230 may be disposed on at least a part of the first bracket housing 210a and the upper portion (e.g., based on the z-axis direction) of at least a part of the sliding support module 310. At least a part of the flexible display 230 may be coupled to the first bracket housing 210a of the first housing 210. At least a part of the flexible display 230 may be retracted into the second housing 220 or extended to the outside of the second housing 220 to correspond to a rotational motion of the roller member 350.

According to various embodiments, in the slide-in state, at least a part of the flexible display 230 may be accommodated in an internal space of the second housing 220, such that at least a part of the flexible display 230 may be disposed to be invisible from the outside. At least a part of the flexible display 230 may be disposed to be visible from the outside while being supported by at least a part of the first bracket housing 210a and at least a part of the sliding support module 310 in the slide-out state. At least a part of the flexible display 230 may be disposed to be visible from the outside while being supported by the sliding support module 310 that defines substantially the same plane as the first bracket housing 210a of the first housing 210 in the slide-out state.

According to the embodiment, the sliding support module 310 may be disposed on the seating surface 2103 of the first bracket housing 210a and the support portion 335 on the roller member 350. The sliding support module 310 may include the plurality of plates 305, the first rail 311, the second rail 312, the second coupling portion 315, first links 317, and/or second links 319.

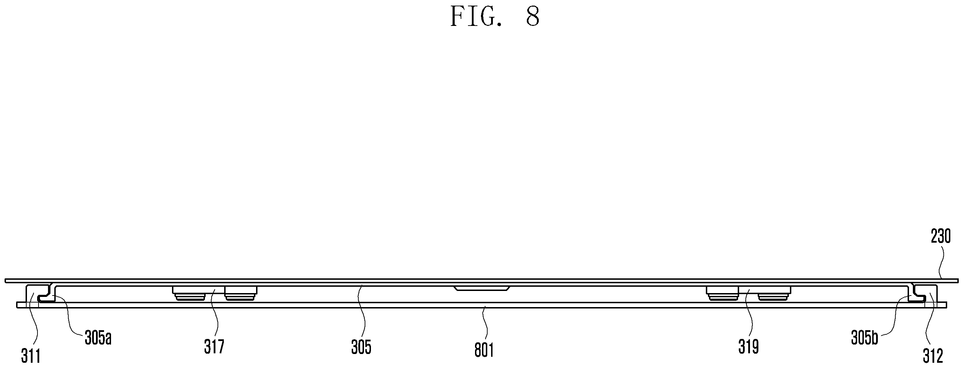

According to various embodiments, at least a part of the plurality of plates 305 may be disposed on the seating surface 2103 of the first bracket housing 210a. The plurality of plates 305 may support at least a part of the flexible display 230. The plurality of plates 305 may be constituted to be closed and/or spread by using the plurality of first links 317 and the plurality of second links 319. The plurality of plates 305 may be closed and/or spread by using the plurality of first links 317 and the plurality of second links 319 depending on the slide-in state and/or the slide-out state of the flexible display 230. The plurality of plates 305 may each include a first bent portion 305a formed on a first side surface, and a second bent portion 305b formed on a second side surface opposite to the first side surface. The first bent portion 305a and the second bent portion 305b may be slidably coupled to the first rail 311 and the second rail 312. The first bent portion 305a and the second bent portion 305b may be coupled to the first rail 311 and the second rail 312 by being fitted with the first rail 311 and the second rail 312. At least a part of one end of the first rail 311 and at least a part of one end of the second rail 312 may be accommodated in the first accommodation portion 2101 and the second accommodation portion 2102 formed in the first bracket housing 210a. At least a part of one end of the first rail 311 and at least a part of one end of the second rail 312 may be accommodated and fixed in the first accommodation portion 2101 and the second accommodation portion 2102. The first rail 311 and the second rail 312 may be slidably coupled to the first guide member 2106 and the second guide member 2108 disposed on the first bracket housing 210a. The first rail 311 and the second rail 312 may be coupled by engaging with (e.g., being fitted with) the first guide member 2106 and the second guide member 2108 disposed on the first bracket housing 210a. The first rail 311 and the second rail 312 may guide the first guide member 2106 and the second guide member 2108 of the first bracket housing 210a so that the first guide member 2106 and the second guide member 2108 slide in the first direction (e.g., the y-axis direction) or the second direction (e.g., the -y-axis direction). The first rail 311 and the second rail 312 may be connected by a rail plate (e.g., a rail plate 801 in FIG. 8). The second coupling portion 315 may include the at least one second fastening hole 314. The at least one second fastening hole 314 formed in the second coupling portion 315 may be disposed to overlap the at least one first fastening hole 2104 formed in the first coupling portion 2105 of the first bracket housing 210a by using the at least one coupling member (e.g., the coupling member 501 in FIG. 5). The at least one coupling member (e.g., the bolt) may be disposed at a position lower than the plurality of plates 305. The first links 317 and the second links 319 may be disposed between the plurality of plates 305. The first links 317 and the second links 319 may include a plurality of links. The first link 317 and the second link 319 may be coupled to a plurality of fixing portions 353 formed on a support portion 355 of the roller member 350.

According to the embodiment, the roller member 350 may rotate so that the second part 230b (e.g., the bendable part in FIG. 2B) of the flexible display 230 may be retracted into the second housing 220 or extended to the outside of the second housing 220. The roller member 350 may be surrounded by at least a part of the flexible display 230. The roller member 350 may support at least a part of the sliding support module 310.

According to various embodiments, the roller member 350 may include the roller 351, the support portion 355, and/or a shaft 357. The roller 351 may rotate so that at least a part (e.g., the second part 230b in FIG. 2B) of the flexible display 230 may be retracted into the second housing 220 or extended to the outside of the second housing 220. The support portion 355 may include the plurality of fixing portions 353. The support portion 355 may support at least a part of the plurality of plates 305 of the sliding support module 310. The plurality of fixing portions 353 may be coupled to the first link 317 and the second link 319 of the sliding support module 310. The shaft 357 may be disposed at one side of the support portion 355. The shaft 357 may be inserted into a central portion of the roller 351, and the roller 351 may be rotatably supported by the shaft 357.

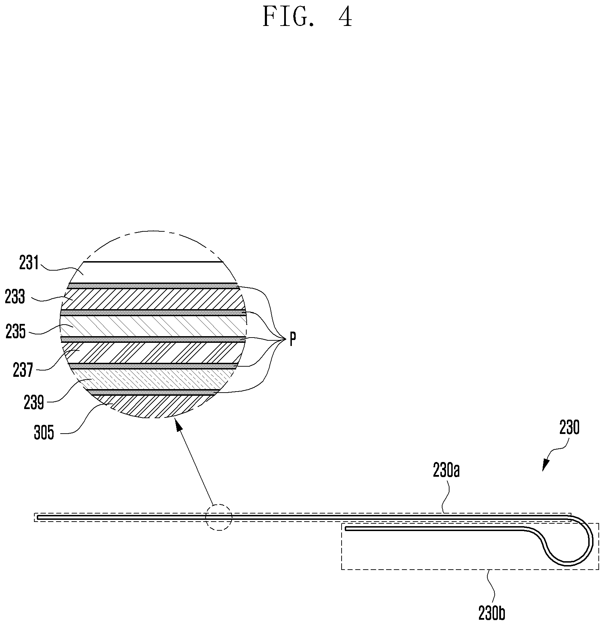

FIG. 4 is a view illustrating a constitution of a flexible display according to various embodiments of the present disclosure.

With reference to FIG. 4, the flexible display 230 according to various embodiments of the present disclosure may include the first part 230a disposed to be visible from the outside when the electronic device 200 is in the slide-in state, and the second part 230b extending from the first part 230a and accommodated in the internal space of the second housing 220 so as to be at least partially invisible from the outside in the slide-in state. In the slide-out state, at least a part of the second part 230b may be kept accommodated in the internal space of the second housing 220 so as to be invisible from the outside.

According to the embodiment, the flexible display 230 may include a protective layer 231 (e.g., a window layer), and a polarizing layer (polarizer) 233 (e.g., a polarizing film), a display panel 235, a polymer member 237, and a metal sheet layer 239 that are sequentially disposed on a lower portion of the protective layer 231.

According to various embodiments, the protective layer 231 may include a polymer layer and/or a glass layer laminated on the polymer layer. The protective layer 231 may include polyethylene terephthalate (PET) or polyimide (PI) as a polymer layer and include ultra-thin glass (UTG) as a glass layer. The protective layer 231 may include a glass layer (e.g., UTG), and a polymer layer (PET or PI) stacked on the glass layer, and adjacent to the external environment.

According to various embodiments, the protective layer 231, the polarizing layer 233, the display panel 235, the polymer member 237, and the metal sheet layer 239 may be attached by using an adhesive agent P disposed therebetween. For example, the adhesive agent P may include at least one of OCA (optical clear adhesive), PSA (pressure sensitive adhesive), a thermally reactive bonding agent, a general bonding agent, or a double-sided tape. According to the embodiment, the flexible display 230 may be attached, by another bonding member, to at least a part of the plurality of plates 305 of the sliding support module 310 and/or at least a part of the first housing 310 (e.g., the first bracket housing 210a). In any embodiment, the polarizing layer 233 may be substituted with a color filter and BM (black matrix).

According to various embodiments, the polymer member 237 may include a buffer member (cushion) that absorbs impact from the outside of the electronic device 200 to prevent damage to and/or breakage of the flexible display 230. In any embodiment, the polymer member 237 may be disposed on a lower portion of the metal sheet layer 239.

According to various embodiments, the metal sheet layer 239 may assist in improving rigidity of the electronic device 200. The metal sheet layer 239 may block noise at the periphery of the electronic device 200. The metal sheet layer 239 may be used to disperse heat discharged from a heat dissipation component mounted on the printed circuit board 301 and to provide bendability to the flexible display 230. The metal sheet layer 239 may include a pattern (e.g., a lattice pattern) having a plurality of openings disposed in an area of the flexible display 230, which faces at least a part of the second part 230b, to provide bendability to the flexible display 230. The bendability of the flexible display 230 may be determined depending on the shape or arrangement structure of the plurality of openings. The metal sheet layer 239 may include at least one of SUS (steel use stainless) (e.g., STS (stainless steel)), Cu, Al, and CLAD (e.g., a stack member in which SUS and Al are alternately disposed). In another embodiment, the metal sheet layer 239 may include another alloy material.

According to various embodiments, the flexible display 230 may further include a detection member (not illustrated) constituted to detect an input made by a writing member (e.g., a stylus pen) using electromagnetic induction. For example, the detection member may include a digitizer. The detection member (e.g., the digitizer) may be disposed between the display panel 235 and the at least one polymer member 237. In another embodiment, the detection member may be disposed on a lower portion of the metal sheet layer 239. The metal sheet layer 239 may have a structural shape (e.g., a plurality of openings) that enables the detection member to detect a signal (e.g., a resonant frequency) of the electronic pen.

According to various embodiments, the flexible display 230 may include at least one functional member (not illustrated) disposed between the polymer member 237 and the metal sheet layer 239. For example, the functional members may include a graphite sheet for heat dissipation, a force touch FPCB, a fingerprint sensor FPCB, a communication antenna radiator, a heat dissipation sheet, a conductive/non-conductive tape, and/or an open cell sponge.

FIG. 5A is a view illustrating a state in which the plurality of plates of the sliding support module according to various embodiments of the present disclosure is closed. FIG. 5B is a view illustrating a state in which the plurality of plates of the sliding support module according to various embodiments of the present disclosure is spread.

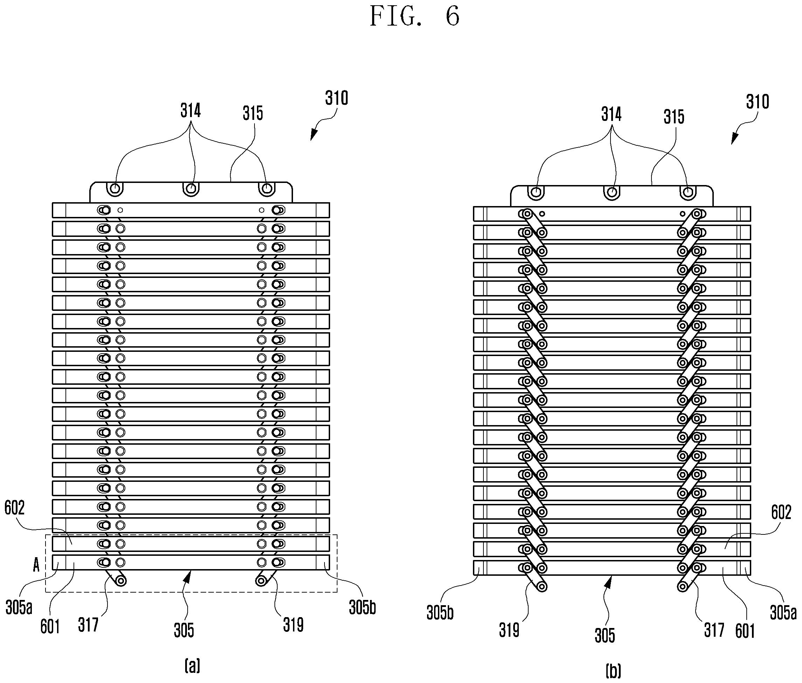

FIG. 6A is a view illustrating a front surface of the sliding support module according to various embodiments of the present disclosure. FIG. 6B is a view illustrating a rear surface of the sliding support module according to various embodiments of the present disclosure.

With reference to FIGS. 5A and 5B, at one end of the plurality of plates 305 of the sliding support module 310 according to various embodiments of the present disclosure, the at least one second fastening hole 314 formed in the second coupling portion 315 may be disposed to overlap the at least one first fastening hole 2104 formed in the first coupling portion 2105 (e.g., see FIG. 3) of the first bracket housing 210a. The at least one second fastening hole 314 and the at least one first fastening hole 2104 may be coupled by using the at least coupling member 501. The at least one coupling member 501 may include a bolt. The at least one coupling member 501 may be disposed at a position lower than the plurality of plates 305.

According to the embodiment, the other end of the plurality of plates 305 may be coupled to the plurality of fixing portions 353 formed on the support portion 355 of the roller member 350 by using the first link 317 and the second link 319. The plurality of plates 305 may each includes the first bent portion 305a formed on the first side surface, and the second bent portion 305b formed on the second side surface. The first bent portion 305a and the second bent portion 305b may be slidably coupled to the first rail 311 and the second rail 312.

According to various embodiments, the first bent portion 305a and the second bent portion 305b may be coupled to the first rail 311 and the second rail 312 by being fitted with the first rail 311 and the second rail 312. The plurality of plates 305 may be constituted to be closed and spread by using the plurality of first links 317 and the plurality of second links 319. The plurality of plates 305 may be closed and/or spread by using the plurality of first links 317 and the plurality of second links 319 depending on the slide-in state and/or the slide-out state of the flexible display 230.

With reference to FIG. 5A, in a case that the first housing 210 and the flexible display 230 are in the slide-in state in the second housing 220, the plurality of plates 305 of the sliding support module 310 may be closed as the plurality of first links 317 and the plurality of second links 319 are folded upward and the first bent portions 305a and the second bent portions 305b are slid along the first rail 311 and the second rail 312 in a downward direction (e.g., the -y-axis direction in FIG. 3). For example, when the first housing 210 and the flexible display 230 are in the slide-in state, intervals between the plurality of plates 305 may be decreased or reduced.

With reference to FIG. 5B, in a case that the first housing 210 and the flexible display 230 are in the slide-out state by being extended to the outside of the second housing 220, the plurality of plates 305 of the sliding support module 310 may be spread as the plurality of first links 317 and the plurality of second links 319 are unfolded downward and the first bent portions 305a and the second bent portions 305b are slid along the first rail 311 and the second rail 312 in an upward direction (e.g., the y-axis direction in FIG. 3). For example, in a case that the first housing 210 and the flexible display 230 are in the slide-out state, the intervals between the plurality of plates 305 may be increased or extended.

With reference to FIGS. 6A and 6B, the plurality of plates 305 of the sliding support module 310 may include a first plate 601 and a second plate 602, for example. The plurality of plates 305 may include the first plate 601, the second plate 602, and an n-th plate.

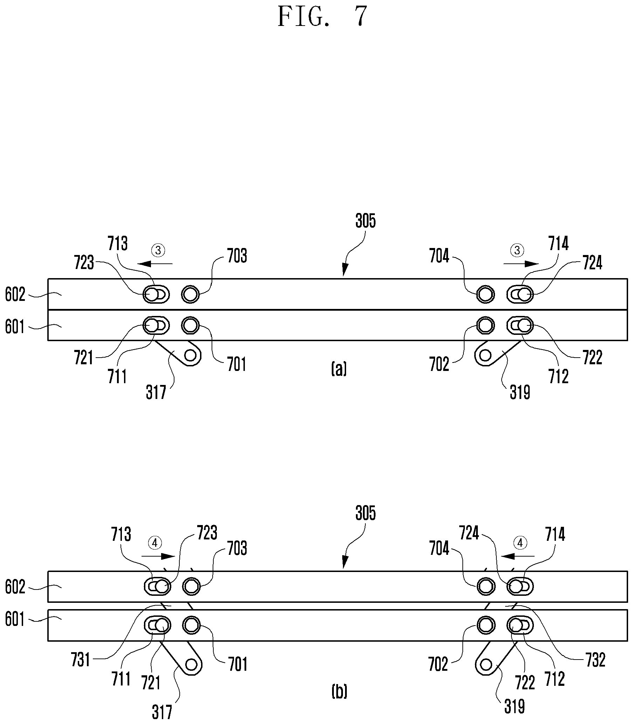

According to the embodiment, the first plate 601 may include the first link 317 and the second link 319. The second plate 602 may include a third link (a third link 731 in FIG. 7) and a second link (a fourth link 732 in FIG. 7). The plurality of plates 305 may be connected by the first link 317, the second link 319, the third link (the third link 731 in FIG. 7), and the second link (the fourth link 732 in FIG. 7).

FIG. 7A is a view illustrating a state in which part A of the plurality of plates illustrated in FIG. 6A is closed. FIG. 7B is a view illustrating a state in which part A of the plurality of plates illustrated in FIG. 6A is spread.

With reference to FIGS. 7A and 7B, the plurality of plates 305 according to various embodiments of the present disclosure may include the first plate 601 and the second plate 602. In the embodiment in FIGS. 7A and 7B, the example is described in which the plurality of plates 305 includes the first plate 601 and the second plate 602. However, the present disclosure is not limited thereto. The plurality of plates 305 may further include the n-th plate.

According to the embodiment, the first plate 601 may include the first link 317, a first fixing portion 701, a first slide hole 711, a first slide protrusion 721, the second link 319, a second fixing portion 702, a second slide hole 712, and a second slide protrusion 722.

According to the embodiment, the second plate 602 may include the third link 731, a third fixing portion 703, a third slide hole 713, a third slide protrusion 723, the fourth link 732, a fourth fixing portion 704, a fourth slide hole 714, and a fourth slide protrusion 724.

According to various embodiments, one end of the first link 317 and one end of the second link 319 may be coupled to the plurality of fixing portions 353 formed on the support portion 355 of the roller member 350 illustrated in FIG. 3. The other end of the first link 317 may be connected to the first slide protrusion 721 disposed in the first slide hole 711. The other end of the second link 319 may be connected to the second slide protrusion 722 disposed in the second slide hole 712. The first fixing portion 701 may be connected to one end of the third link 731 of the second plate 602. The first fixing portion 701 may fix one end of the third link 731. The second fixing portion 702 may be connected to one end of the fourth link 732 of the second plate 602. The second fixing portion 702 may fix one end of the fourth link 732.

According to various embodiments, the other end of the third link 731 may be connected to the third slide protrusion 723 disposed in the third slide hole 713. Third fixing portion 703 may be connected to one end of the link disposed on another plate (e.g., the plate disposed above the second plate 302). The other end of the fourth link 732 may be connected to the fourth slide protrusion 724 disposed in the fourth slide hole 714. The fourth fixing portion 704 may be connected to one end of the link disposed on another plate (e.g., the plate disposed above the second plate 302).

With reference to FIG. 7A, in case that the first housing 210 and the flexible display 230 are in the slide-in state in the second housing 220, the first slide protrusion 721, which is connected to the other end of the first link 317, and the second slide protrusion 722, which is connected to the other end of the second link 319, may be moved in a direction (e.g., direction ③ in FIG. 7A) toward the outside of the first slide hole 711 and the second slide hole 712. In case that the first slide protrusion 721 and the second slide protrusion 722 move in the outward direction, the first link 317, the second link 319, the third link 731, and the fourth link 732 are folded while moving upward, such that the intervals between the plurality of plates 305 (e.g., the first plate 601 and the second plate 602) of the sliding support module 310 may vary. For example, the intervals between the plurality of plates 305 (e.g., the first plate 601 and the second plate 602) of the sliding support module 310 may be decreased and/or reduced.

With reference to FIG. 7B, in case that the first housing 210 and the flexible display 230 are in the slide-out state by being extended to the outside of the second housing 220, the first slide protrusion 721, which is connected to the other end of the first link 317, and the second slide protrusion 722, which is connected to the other end of the second link 319 may be moved in a direction (e.g., direction ④ in FIG. 7B) toward the inside of the first slide hole 711 and the second slide hole 712. In a case that the first slide protrusion 721 and the second slide protrusion 722 move in the inward direction, the first link 317, the second link 319, the third link 731, and the fourth link 732 are unfolded while moving downward, such that the intervals between the plurality of plates 305 (e.g., the first plate 601 and the second plate 602) of the sliding support module 310 may vary. For example, the intervals between the plurality of plates 305 (e.g., the first plate 601 and the second plate 602) of the sliding support module 310 may be increased and/or extended.

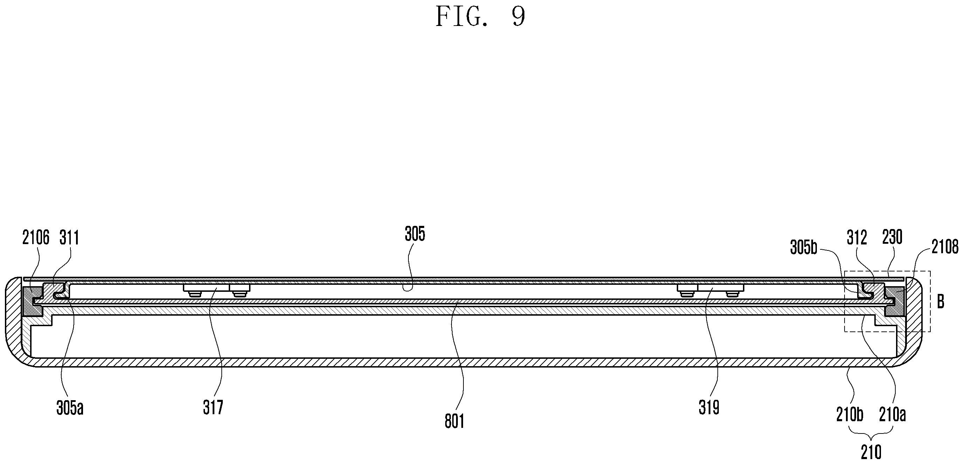

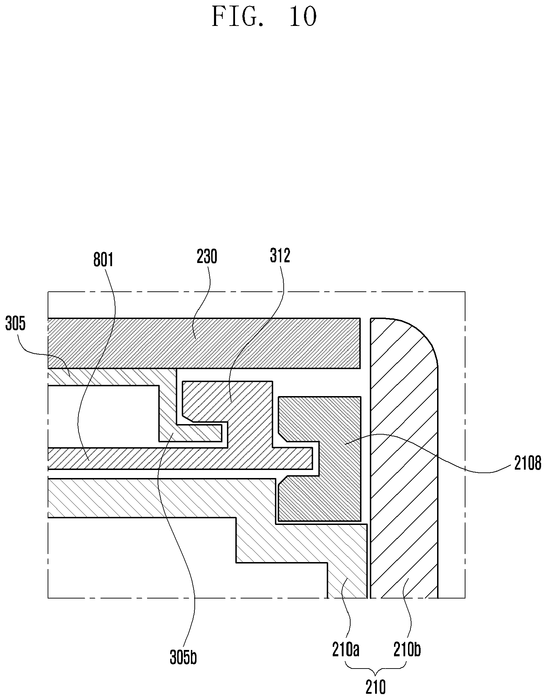

FIG. 8 is a view illustrating a coupling relationship between the first and second bent portions and the first and second rails of the plate of the electronic device according to various embodiments of the present disclosure. FIG. 9 is a cross-sectional view schematically illustrating part 9-9' of the electronic device according to various embodiments of the present disclosure illustrated in FIG. 2A. FIG. 10 is an enlarged view illustrating part B illustrated in FIG. 9.

With reference to FIGS. 8 to 10, at least a part of the flexible display 230 may be disposed above the plurality of plates 305. The plurality of plates 305 may each include the first bent portion 305a formed on the first side surface, and the second bent portion 305b formed on the second side surface. The first bent portion 305a and the second bent portion 305b may be coupled to be slidable along the first rail 311 and the second rail 312.

According to the embodiment, the first bent portion 305a and the second bent portion 305b may be coupled to the first rail 311 and the second rail 312 by being fitted with the first rail 311 and the second rail 312. The first rail 311 and the second rail 312 may be connected by the flat rail plate 801. The first links 317 and the second links 319 may be disposed on the rear surfaces of the plurality of plates 305.

According to the embodiment, the first and second rails 311 and 312 disposed on the sliding support module 310 may slidably coupled to the first and second guide members 2106 and 2108 disposed on the first bracket housing 210a of the first housing 210. The first rail 311 and the second rail 312 may be coupled by engaging with (e.g., being fitted with) the first guide member 2106 and the second guide member 2108 disposed on the first bracket housing 210a.

According to the embodiment, the rail plate 801, which connects the first rail 311 and the second rail 312, may be disposed on at least a part of the seating surface 2103 of the first bracket housing 210a. The first and second guide members 2106 and 2108 of the first bracket housing 210a may slide along the first and second rails 311 and 312 in the first direction (e.g., the y-axis direction in FIG. 2A) or the second direction (e.g., the -y-axis direction in FIG. 2). The first guide member 2106 and the second guide member 2108 may be disposed at two opposite sides of the seating surface 2103 of the first bracket housing 210a. The first guide member 2106 and the second guide member 2108 may be integrally coupled to the first bracket housing 210a. In another embodiment, the first and second guide members 2106 and 2108 may be separately manufactured and then coupled to the first bracket housing 210a.

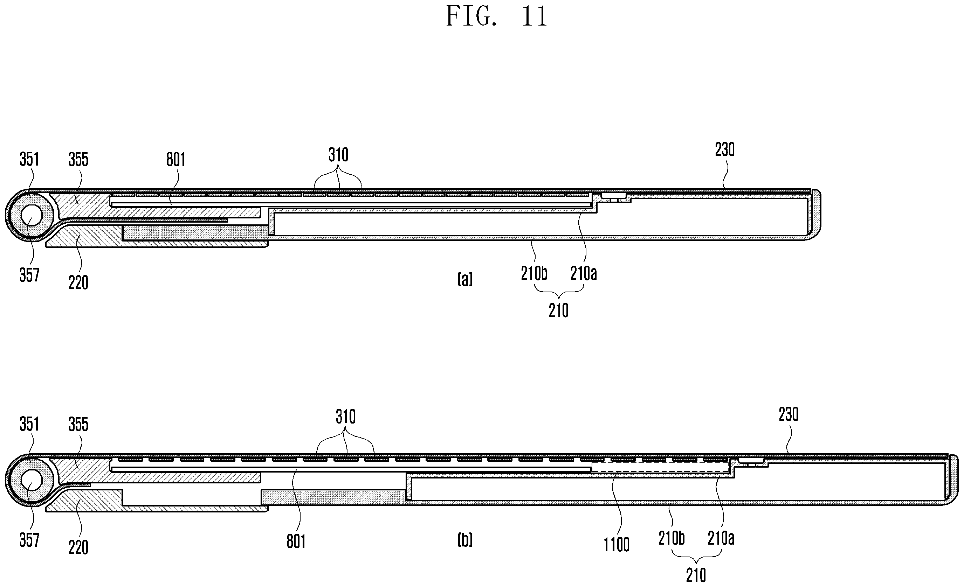

FIG. 11A is a cross-sectional view schematically illustrating part 11a-11a' of the electronic device according to various embodiments of the present disclosure illustrated in FIG. 2A. FIG. 11B is a cross-sectional view schematically illustrating part 11b-11b' of the electronic device according to various embodiments of the present disclosure illustrated in FIG. 2B.

With reference to FIG. 11A, in the electronic device 200 according to various embodiments of the present disclosure, the plurality of plates 305 of the sliding support module 310 may be kept closed in a case that at least a part of the flexible display 230 and at least a part of the first housing 210 are in the slide-in state in the second housing 220. The roller 351 may not rotate when the electronic device 200 is in the slide-in state.

With reference to FIG. 11B, in the electronic device 200 according to various embodiments of the present disclosure, the plurality of plates 305 of the sliding support module 310 may be spread in a case that at least a part of the flexible display 230 and at least a part of the first housing 210 are in the slide-out state by being extended to the outside of the second housing 220. In a case that the electronic device 200 is in the slide-out state, the roller 351 may rotate, and the flexible display 230 and the first housing 210 may slide. In a case that the electronic device 200 is in the slide-out state, at least a part of the flexible display 230, which is disposed in a space 1100 defined between the flexible display 230 and the first bracket housing 210a of the first housing 210, may be supported by the plurality of plates 305 of the sliding support module 310.

According to the embodiment, in the electronic device 200 according to various embodiments of the present disclosure, when at least a part of the flexible display 230 and at least a part of the first housing 210 are slid and extended to the outside of the second housing 220, the sliding support module 310 may be used to support at least a part of the rear surface of the flexible display 230 and disperse the pressure applied from the outside of the flexible display 230.

The electronic device 200 according to various embodiments of the present disclosure may include: the first housing 210; the second housing 220 slidably coupled to the first housing 210 and constituted to allow at least a part of the first housing 210 to be retracted into and/or extended from the second housing 220; the sliding support module 310 disposed on at least a part of the upper portion of the first housing 210; and the flexible display 230 at least partially connected to the first housing 210 and supported by at least a part of the first housing 210 and at least a part of the sliding support module 310, in which in a case that at least a part of the first housing 210 and at least a part of the flexible display 230 are extended to the outside of the second housing 220, the sliding support module 310 is expanded to correspond to the extension of the flexible display 230 and supports at least a part of the rear surface of the flexible display 230.

According to the embodiment, the sliding support module 310 may include: the plurality of plates 305 constituted to support at least a part of the rear surface of the flexible display 230; and the plurality of first links 317 and the plurality of second links 319 constituted to decrease and/or increase intervals between the plurality of plates 305 to correspond to the retraction and/or extension of at least a part of the first housing 210 and the flexible display 230 with respect to the second housing 220.

According to the embodiment, the first housing 210 may include: the first bracket housing 210a constituted to support at least a part of the sliding support module 310; and the second bracket housing 210b coupled to the first bracket housing 210a and constituted to define an internal space.

According to the embodiment, the first bracket housing 210a may include: the first accommodation portion 2101 formed in the upper portion of the first side; the second accommodation portion 2102 formed at the second side opposite to the first side; the seating surface 2103 constituted to support at least a part of the sliding support module 310; the first coupling portion 2105 including the at least one first fastening hole 2104; the first guide member 2106 disposed on the upper portion of the first side of the seating surface 2103; and the second guide member 2108 disposed on the upper portion of the second side opposite to the first side of the seating surface 2103.

According to the embodiment, the sliding support module 310 may include: the first rail 311 at least partially disposed on the first accommodation portion 2101; the second rail 312 at least partially disposed on the second accommodation portion 2102; and the second coupling portion 315 including the second fastening hole 314 disposed to overlap the at least one first fastening hole 2104 formed in the first coupling portion 2105, the second fastening hole 314 being coupled to the first fastening hole 2104 by using the at least one coupling member 501.

According to the embodiment, the first guide member 2106 may be slidably coupled to the first rail 311, and the second guide member 2108 may be slidably coupled to the second rail 312.

According to the embodiment, the electronic device may further include the roller member 350 constituted to support at least a part of the sliding support module 310 and rotate while corresponding to the sliding motion of the flexible display 230, in which at least a part of the flexible display 230 is constituted to surround at least a part of the roller member 350 and constituted to be retracted into the second housing 220 or extended to the outside of the second housing 220 depending on the rotational motion of the roller member 350.

According to the embodiment, the flexible display 230 may include: the first part 230a disposed to be visible from the outside in a state in which the second housing 220 is retracted; and the second part 230b extending from the first part 230b and disposed to be invisible from the outside by being accommodated in the second housing 220.

According to the embodiment, the plurality of plates 305 may each include: the first bent portion 305a formed on the first side surface; and the second bent portion 305b formed on the second side surface opposite to the first side surface, and the first bent portion 305a and the second bent portion 305b may be slidably coupled to the first rail 311 and the second rail 312.

According to the embodiment, the first rail 311 and the second rail 312 may be connected by the rail plate 801, and the rail plate 801 may be constituted to be supported by the first bracket housing 210b.

According to the embodiment, the roller member 350 may include: the roller 351 constituted to rotate so that at least a part of the flexible display 230 is retracted into the second housing 220 or extended to the outside of the second housing 220; the support portion 355 including the plurality of fixing portions 353 and constituted to support at least a part of the plurality of plates 305; and the shaft 357 inserted into the central portion of the roller 351 and constituted to support the roller 351 so that the roller 351 is rotatable, and the plurality of fixing portions 353 may be coupled to the first and second links 317 and 319 of the sliding support module 310.

According to the embodiment, the plurality of plates 305 may each include the first plate 601 and the second plate 602, the first plate 601 may include the first link 317, the first fixing portion 701, the first slide hole 711, the first slide protrusion 721, the second link 319, the second fixing portion 702, the second slide hole 712, and the second slide protrusion 722, and the second plate 602 may include the third link 731, the third fixing portion 703, the third slide hole 713, the third slide protrusion 723, the fourth link 732, the fourth fixing portion 704, the fourth slide hole 714, and the fourth slide protrusion 724.

According to the embodiment, one end of the first link 317 and one end of the second link 319 may be coupled to the plurality of fixing portions 353 formed on the support portion 355, the other end of the first link 317 may be connected to the first slide protrusion 721 disposed in the first slide hole 711, the other end of the second link 319 may be connected to the second slide protrusion 722 disposed in the second slide hole 712, the first fixing portion 701 may be connected to one end of the third link 731 of the second plate 602, the second fixing portion 702 may be connected to one end of the fourth link 732 of the second plate 602, and the other end of the third link 731 may be connected to the third slide protrusion 724 disposed in the third slide hole 713.

According to the embodiment, the first plate 601 and the second plate 602 may be constituted to be closed when the first link 317, the second link 319, the third link 731, and the fourth link 732 are folded upward as the first slide protrusion 721, which is connected to the other end of the first link 317, and the second slide protrusion 722, which is connected to the other end of the second link 319, move toward the outside of the first slide hole 711 and the second slide hole 712 in a state in which the first housing 210 and the flexible display 230 are retracted into the second housing 220.

According to the embodiment, the first plate 601 and the second plate 602 may be constituted to be spread when the first link 317, the second link 319, the third link 731, and the fourth link 732 are unfolded downward as the first slide protrusion 721, which is connected to the other end of the first link 317, and the second slide protrusion 722, which is connected to the other end of the second link 319, move toward the inside of the first slide hole 711 and the second slide hole 712 in a state in which the first housing 210 and the flexible display 230 are extended to the outside of the second housing 220.

The electronic device 200 according to various embodiments of the present disclosure may include: the first housing 210; the second housing 220 slidably coupled to the first housing 210 and constituted to allow at least a part of the first housing 210 to be retracted into and/or extended from the second housing 220; the sliding support module 310 disposed on at least a part of the upper portion of the first housing 210; and the flexible display 230 at least partially connected to the first housing 210 and supported by at least a part of the first housing 210 and at least a part of the sliding support module 310, in which the sliding support module 310 may include: the first and second plates 601 and 602 constituted to support at least a part of the rear surface of the flexible display 230; and the first and second links 317 and 319 connected to the first and second plate 601 and 602 and constituted to change the interval between the first plate 601 and the second plate 602, and wherein the interval between the first plate 601 and the second plate 602 increases to correspond to expansion of the first link 317 and the second link 219 in a case that at least a part of the first housing 210 and at least a part of the flexible display 230 slide in a designated direction, such that the first plate 601 and the second plate 602 are constituted to support the rear surface of the flexible display 230 at a plurality of points.

According to the embodiment, the electronic device may further include the roller member 350 configured to support at least a part of the sliding support module 310 and rotate while corresponding to the sliding motion of the flexible display 230, in which at least a part of the flexible display 230 is constituted to surround at least a part of the roller member 350 and constituted to be retracted into the second housing 220 or extended to the outside of the second housing 220 depending on the rotational motion of the roller member 350.

According to the embodiment, the first housing 210 may include: the first bracket housing 210a configured to support at least a part of the sliding support module 310; and the second bracket housing 210b coupled to the first bracket housing 210a and constituted to define an internal space.

According to the embodiment, the first bracket housing 210a may include: the first accommodation portion 2101 formed in the upper portion of the first side; the second accommodation portion 2102 formed at the second side opposite to the first side; the seating surface 2103 constituted to support at least a part of the sliding support module 310; the first coupling portion 2105 including the at least one first fastening hole 2104; the first guide member 2106 disposed on the upper portion of the first side of the seating surface 2103; and the second guide member 2108 disposed on the upper portion of the second side opposite to the first side of the seating surface 2103.

According to the embodiment, the sliding support module 310 may include: the first rail 311 at least partially disposed on the first accommodation portion 2101; the second rail 312 at least partially disposed on the second accommodation portion 2102; and the second coupling portion 315 including the second fastening hole 314 disposed to overlap the at least one first fastening hole 2104 formed in the first coupling portion 2105, the second fastening hole 314 being coupled to the first fastening hole 2104 by using the at least one coupling member 501.

While the present disclosure has been described above with reference to various embodiments of the present disclosure, it is apparent that the alterations and modifications may be made by those skilled of the present disclosure and belong to the present disclosure.

## Claims

1. An electronic device comprising:
a first housing;
a second housing slidably coupled to the first housing and constituted to allow at least a part of the first housing to be retracted into and/or extended from the second housing;
a sliding support module disposed on at least a part of an upper portion of the first housing; and
a flexible display at least partially connected to the first housing and supported by at least a part of the first housing and at least a part of the sliding support module,
wherein in a case that at least a part of the first housing and at least a part of the flexible display are extended to the outside of the second housing, the sliding support module is expanded to correspond to the extension of the flexible display and supports at least a part of a rear surface of the flexible display.

2. The electronic device of claim 1, wherein the sliding support module comprises:
a plurality of plates constituted to support at least a part of the rear surface of the flexible display; and
a plurality of first links and a plurality of second links constituted to decrease and/or increase intervals between the plurality of plates to correspond to the retraction and/or extension of at least a part of the first housing and the flexible display with respect to the second housing.

3. The electronic device of claim 1, wherein the first housing comprises:
a first bracket housing constituted to support at least a part of the sliding support module; and
a second bracket housing coupled to the first bracket housing and constituted to define an internal space.

4. The electronic device of claim 3, wherein the first bracket housing comprises:
a first accommodation portion formed in an upper portion of a first side;
a second accommodation portion formed at a second side opposite to the first side;
a seating surface constituted to support at least a part of the sliding support module;
a first coupling portion including at least one first fastening hole;
a first guide member disposed on an upper portion of the first side of the seating surface; and
a second guide member disposed on an upper portion of the second side opposite to the first side of the seating surface.

5. The electronic device of claim 4, wherein the sliding support module comprises:
a first rail at least partially disposed on the first accommodation portion;
a second rail at least partially disposed on the second accommodation portion; and
a second coupling portion including the second fastening hole disposed to overlap the at least one first fastening hole formed in the first coupling portion, the second fastening hole being coupled to the first fastening hole by using at least one coupling member.

6. The electronic device of claim 5, wherein the first guide member is slidably coupled to the first rail, and the second guide member is slidably coupled to the second rail.

7. The electronic device of claim 1, further comprising:
a roller member configured to support at least a part of the sliding support module and rotate while corresponding to a sliding motion of the flexible display,
wherein at least a part of the flexible display is constituted to surround at least a part of the roller member and constituted to be retracted into the second housing or extended to the outside of the second housing depending on a rotational motion of the roller member.

8. The electronic device of claim 1, wherein the flexible display comprises:
a first part disposed to be visible from the outside in a state in which the second housing is retracted; and
a second part extending from the first part and disposed to be invisible from the outside by being accommodated in the second housing.

9. The electronic device of claim 4, wherein the plurality of plates each comprises:
a first bent portion formed on a first side surface; and
a second bent portion formed on a second side surface opposite to the first side surface, and
wherein the first bent portion and the second bent portion are slidably coupled to the first rail and the second rail.

10. The electronic device of claim 9, wherein the first rail and the second rail are connected by a rail plate, and the rail plate is constituted to be supported by the first bracket housing.

11. The electronic device of claim 7, wherein the roller member comprises:
a roller constituted to rotate so that at least a part of the flexible display is retracted into the second housing or extended to the outside of the second housing;
a support portion including a plurality of fixing portions and constituted to support at least a part of the plurality of plates; and
a shaft inserted into a central portion of the roller and constituted to support the roller so that the roller is rotatable, and
wherein the plurality of fixing portions is constituted to be coupled to the first and second links of the sliding support module.

12. The electronic device of claim 11, wherein the plurality of plates each comprises a first plate and a second plate, the first plate comprises a first link, a first fixing portion, a first slide hole, a first slide protrusion, a second link, a second fixing portion, a second slide hole, and a second slide protrusion, and the second plate comprises a third link, a third fixing portion, a third slide hole, a third slide protrusion, a fourth link, a fourth fixing portion, a fourth slide hole, and a fourth slide protrusion.

13. The electronic device of claim 12, wherein one end of the first link and one end of the second link are coupled to the plurality of fixing portions formed on the support portion,
wherein the other end of the first link is connected to the first slide protrusion disposed in the first slide hole,
wherein the other end of the second link is connected to the second slide protrusion disposed in the second slide hole,
wherein the first fixing portion is connected to one end of the third link of the second plate,
wherein the second fixing portion is connected to one end of the fourth link of the second plate, and
wherein the other end of the third link is connected to the third slide protrusion disposed in the third slide hole.

14. The electronic device of claim 13, wherein the first plate and the second plate are constituted to be closed when the first link, the second link, the third link, and the fourth link are folded upward as the first slide protrusion, which is connected to the other end of the first link, and the second slide protrusion, which is connected to the other end of the second link, move toward the outside of the first slide hole and the second slide hole in a state in which the first housing and the flexible display are retracted into the second housing.

15. The electronic device of claim 13, wherein the first plate and the second plate are constituted to be spread when the first link, the second link, the third link, and the fourth link are unfolded downward as the first slide protrusion, which is connected to the other end of the first link, and the second slide protrusion, which is connected to the other end of the second link, move toward the inside of the first slide hole and the second slide hole in a state in which the first housing and the flexible display are extended to the outside of the second housing.
